# DEMANDE DE BREVET EUROPEEN

(11) **EP 1 621 452 A1**
(43) Date de publication de la demande: **01.02.2006**
(21) Numéro de dépôt: 05300619.3
(22) Date de dépôt: 25.07.2005
(51) Int. Cl.: B62D 33/077, A61G 3/00, B62D 29/04, B62D 33/04, B62D 39/00

(54) **Cellule de véhicule automobile, destinée à un aménagement fonctionnel**

(30) Priorité: 30.07.2004 FR 0408450
(71) Demandeur: SAMBULING, 28270 Brezolles (FR)
(72) Inventeur: Sandrin, Philippe, 28400, Coudreceau (FR)
(74) Mandataire: Laget, Jean-Loup

(57) **Abrégé**

Cellule (2) destinée à être fixée sur un châssis de véhicule automobile, ladite cellule comportant une paroi de plancher (5), deux parois latérales (7, 8), une paroi avant (6), une paroi de toit (9) et une paroi arrière (10) munie d'au moins une porte (21), lesdites parois étant assemblées de manière à former une structure autoporteuse rigide apte à être soulevée d'un seul tenant. La cellule peut comporter des éléments intérieurs d'aménagement fonctionnel ou professionnel. La cellule peut être fixée sur la plateforme arrière d'un véhicule automobile, des supports de fixation étant rapportés sur les côtés latéraux de ladite plateforme pour soutenir les zones latérales de ladite cellule et étant liés à ladite cellule par des attaches amovibles.

## Description

La présente invention se rapporte à une cellule destinée à un aménagement intérieur fonctionnel et apte à être fixée sur un châssis de véhicule automobile et à un véhicule automobile comportant un châssis muni d'une plateforme arrière et une cellule fixée sur ladite plateforme. L'invention concerne notamment les véhicules légers à usage d'ambulance, correspondant par exemple aux classes A, B et C de la norme EN1789.

Dans une ambulance, par exemple du type décrit dans FR-A-2587941, la cellule arrière est conçue pour recevoir un malade ou un blessé en position allongée et du personnel soignant. Une telle cellule inclut un aménagement spécialisé fixé aux parois de la cellule et dont le prix de revient est très élevé (table porte-brancard, bouteilles de gaz, appareils respiratoires, mobilier de rangement, etc.) Comme une ambulance est utilisée en général de manière intensive et presque constamment en déplacement (typiquement 60 000 à 90 000 km/an), son châssis et son moteur atteignent rapidement un état d'usure nécessitant leur remplacement, par exemple au bout de 4 ans environ. L'amortissement financier d'un tel véhicule doit donc être réalisé sur une période relativement brève, ce qui implique un coût d'exploitation élevé.

La présente invention part du constat que l'équipement spécialisé de la cellule arrière présente en général une durée de vie beaucoup plus longue que celle du châssis de véhicule, par exemple une durée de vie de l'ordre de 10 années au moins et qu'une cellule aménagée atteint facilement un coût supérieur à celui du châssis de véhicule proprement dit, selon un facteur d'environ 1,5 ou plus. Ce constat s'applique d'ailleurs à d'autres équipements que celui des ambulances.

L'invention vise donc à fournir une cellule pour véhicule qui permette d'exploiter un aménagement et/ou équipement intérieur sur une plus longue durée que la durée de vie du châssis.

Pour cela, l'invention fournit une cellule destinée à un aménagement intérieur fonctionnel et apte à être fixée sur un châssis de véhicule automobile, ladite cellule comportant une paroi de plancher, deux parois latérales, une paroi avant, une paroi de toit et une paroi arrière munie d'au moins une porte, lesdites parois étant assemblées de manière à former une structure autoporteuse rigide apte à être soulevée d'un seul tenant. Comme la cellule est fabriquée sous la forme d'une structure autoporteuse indépendante, elle peut être utilisée successivement sur plusieurs châssis sans devoir être réduite en pièces détachées et sans subir de dégâts lors de son transfert. Bien sûr, on utilisera des moyens d'attache amovibles pour fixer une telle cellule sur son châssis.

De préférence, la paroi arrière comporte un cadre rigide lié à une portion arrière desdites paroi de plancher, parois latérales et paroi de toit, ladite porte étant montée dans ledit cadre. Un tel cadre permet d'obtenir une structure autoporteuse suffisamment rigide tout en utilisant des matériaux relativement légers pour les différentes parois.

Selon un mode de réalisation particulier, le cadre rigide est réalisé en éléments métalliques soudés, par exemple tôles pliées et/ou tubes.

De préférence, la paroi de plancher et les parois latérales incluent un panneau de plancher et deux panneaux latéraux respectivement, qui sont assemblés par des éléments profilés s'étendant le long de deux bords latéraux opposés dudit panneau de plancher. Ainsi, la construction de la cellule est facilitée. Un panneau peut facilement être remplacé si besoin sans devoir démonter toute la cellule. De plus, de tels éléments profilés, notamment métalliques, constituent des zones de fixation à la fois résistantes et faciles d'accès pour pouvoir fixer solidement la cellule sur un châssis de véhicule.

Avantageusement, chacun des éléments profilés inclut une portion de base disposée sous un panneau latéral pour soutenir ledit panneau latéral, une portion de retenue faisant saillie au dessus de ladite portion de base pour retenir ledit panneau latéral dans une direction latérale de ladite cellule et une portion d'appui faisant saillie latéralement vers l'intérieur de ladite cellule par rapport à ladite portion de base et apte à s'appuyer sur un plancher du châssis de véhicule.

Selon un mode de réalisation particulier, chacun des éléments profilés inclut une portion de fixation s'étendant perpendiculairement sous ladite portion de base et apte à être fixée latéralement contre ledit châssis de véhicule.

Avantageusement, les parois latérales, paroi avant et paroi de pavillon comprennent respectivement un panneau stratifié incluant une couche de matière alvéolaire synthétique. Un tel panneau présente des caractéristiques avantageuses en termes de poids, de solidité et d'isolation.

De préférence, la cellule comporte des éléments intérieurs d'aménagement fonctionnel solidaires desdites parois. Selon un autre mode de réalisation particulier, la cellule comporte un aménagement intérieur d'ambulance pour le transport de personnes malades ou blessées.

Avantageusement, la paroi de plancher comporte des découpes sur les bords latéraux pour laisser dépasser des roues arrières de véhicule en saillie au-dessus de ladite paroi de plancher, lesdites découpes étant masquées par des coffrages reliant ladite paroi de plancher auxdites parois latérales.

L'invention fournit aussi un véhicule automobile comportant un châssis muni d'une plateforme arrière et une cellule fixée sur ladite plateforme.

Selon un mode de réalisation particulier, des supports de fixation sont rapportés sur les côtés latéraux de ladite plateforme pour soutenir les zones latérales de ladite cellule et étant liés à ladite cellule par des attaches amovibles. De tels supports latéraux peuvent être facilement rapportés sur un châssis de véhicule disponible dans le commerce, par exemple par soudure ou boulonnage, et ils permettent d'adapter la largeur d'un tel châssis à la largeur prédéterminée de la cellule.

De préférence, les supports de fixation sont réalisés en tôle métallique et présentent respectivement deux ailes latérales faisant saillie vers l'extérieur dans la direction latérale dudit châssis et espacées l'une de l'autre dans la direction longitudinale dudit châssis, ainsi qu'au moins une paroi longitudinale percée pour recevoir au moins une desdites attaches et s'étendant entre lesdites ailes latérales, l'espace situé entre lesdites ailes latérales étant accessible depuis un côté inférieur desdites ailes latérales. De tels supports de fixation sont légers, permettent une fixation solide de la cellule et donnent un accès facile aux attaches, en raison de leur disposition latérale et de leur structure ouverte.

Selon un mode de réalisation particulier, ladite au moins une paroi longitudinale inclut une paroi supérieure, ladite paroi de plancher et lesdites parois latérales de la cellule incluant un panneau de plancher et deux panneaux latéraux respectivement, qui sont assemblés par des éléments profilés s'étendant le long de deux bords latéraux opposés dudit panneaux de plancher, chacun desdits éléments profilés incluant une portion de base disposée sous un panneau latéral pour soutenir ledit panneau latéral, une portion de retenue faisant saillie au dessus de ladite portion de base pour retenir ledit panneau latéral dans une direction latérale de ladite cellule et une portion d'appui faisant saillie latéralement vers l'intérieur de ladite cellule par rapport à ladite portion de base et fixée sur ladite paroi supérieure du support de fixation.

Selon un autre mode de réalisation particulier, ladite au moins une paroi longitudinale inclut une paroi d'extrémité latérale, ladite paroi de plancher et lesdites parois latérales de la cellule incluant un panneau de plancher et deux panneaux latéraux respectivement, qui sont assemblés par des éléments profilés s'étendant le long de deux bords latéraux opposés dudit panneaux de plancher, chacun desdits éléments profilés incluant une portion de base disposée sous un panneau latéral pour soutenir ledit panneau latéral, une portion de retenue faisant saillie au dessus de ladite portion de base pour retenir ledit panneau latéral dans une direction latérale de ladite cellule, une portion d'appui faisant saillie latéralement vers l'intérieur de ladite cellule par rapport à ladite portion de base et une portion de fixation s'étendant perpendiculairement sous ladite portion de base et fixée contre ladite paroi d'extrémité latérale du support de fixation.

Avantageusement, le véhicule comporte un support arrière rapporté sur le côté arrière de ladite plateforme pour soutenir une zone arrière de ladite cellule et lié à ladite cellule par des attaches amovibles. Un tel support arrière peut être facilement rapporté sur un châssis de véhicule disponible dans le commerce, par exemple par soudure ou boulonnage, et il permet d'adapter la longueur d'un tel châssis à la longueur prédéterminée de la cellule.

De préférence, la paroi arrière de la cellule comporte un cadre rigide lié à une portion arrière desdites paroi de plancher, parois latérales et paroi de toit, ladite porte étant montée dans ledit cadre, ledit cadre rigide étant lié audit support arrière.

Avantageusement, lesdites attaches amovibles comportent des boulons.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
- la figure 1 est une vue latérale partiellement en coupe d'un véhicule utilitaire muni d'une cellule selon un mode de réalisation de l'invention,
- la figure 2 est une vue en perspective de la cellule de la figure 1 séparée du châssis du véhicule,
- la figure 3 est une vue en perspective éclatée de la cellule de la figure 2,
- la figure 4 représente partiellement un panneau de pavillon de la cellule vu en coupe selon la ligne IV-IV de la figure 3,
- la figure 5 représente partiellement un cadre arrière de la cellule vu en coupe selon la ligne V-V de la figure 3,
- la figure 6 est une vue latérale du châssis du véhicule de la figure 1 aménagé pour recevoir la cellule,
- la figure 7 est une demi vue de dessus du châssis de la figure 6,
- la figure 8 est une vue partielle en coupe selon la ligne VIII-VIII de la figure 1 montrant une liaison entre la cellule et la cabine du véhicule,
- la figure 9 est une vue partielle en coupe selon la ligne IX-IX de la figure 1 montrant une liaison entre la cellule et le châssis du véhicule,
- la figure 10 est une vue partielle en coupe selon la ligne X-X de la figure 1 montrant une liaison entre la cellule et le châssis du véhicule,
- la figure 11 est une vue analogue à la figure 9 pour un deuxième mode de réalisation de la cellule et du châssis de véhicule,
- la figure 12 représente partiellement un cadre arrière de la cellule vu en coupe selon la ligne XII-XII de la figure 3,
- la figure 13 est une vue en perspective d'une cellule selon un autre mode de réalisation de l'invention.

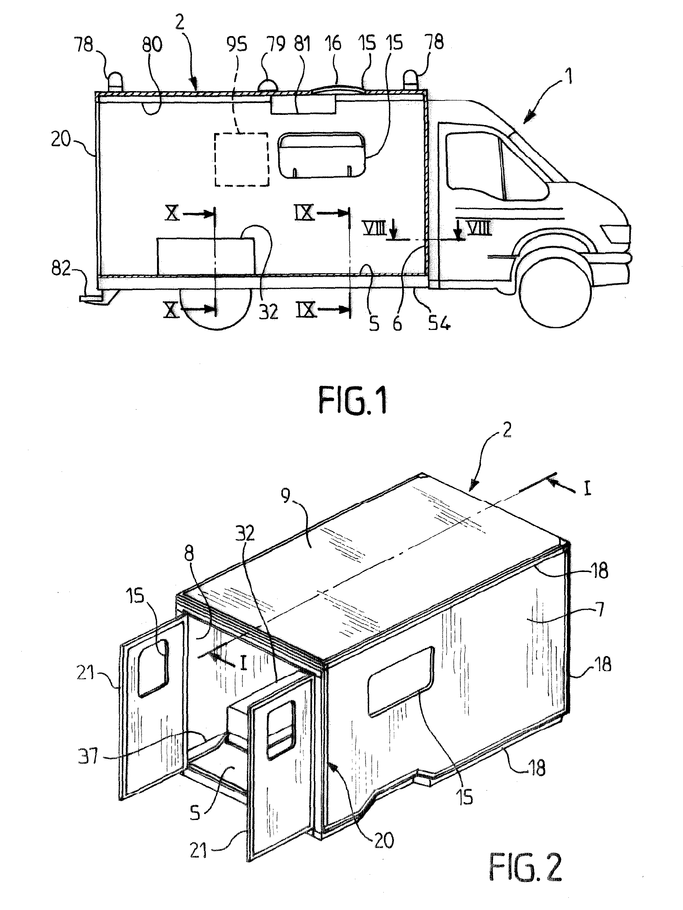

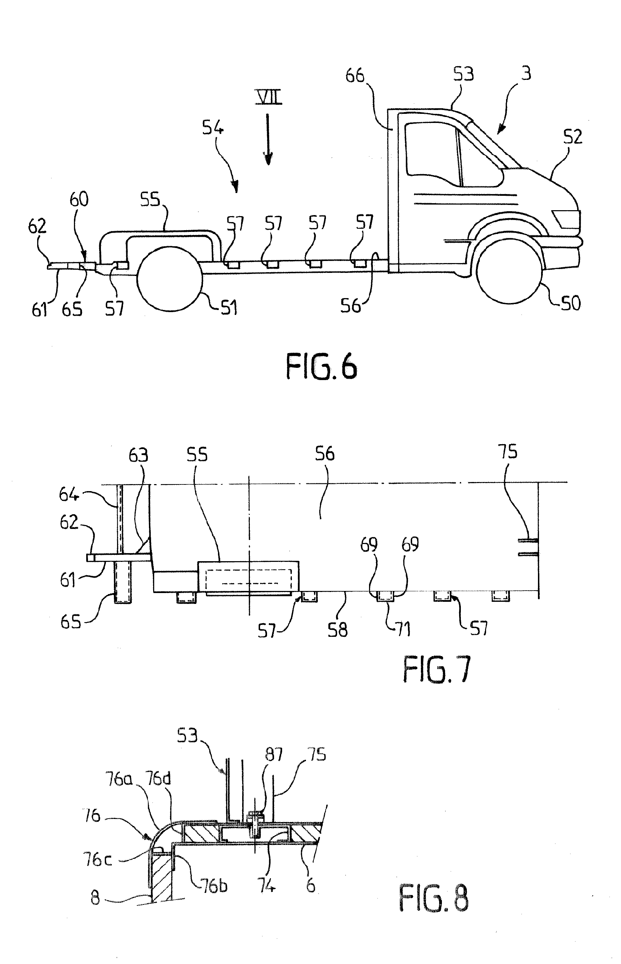

On va décrire maintenant un mode de réalisation d'un véhicule utilitaire qui comporte une cellule autoporteuse fixée de manière amovible sur une plateforme arrière d'un châssis de véhicule. Le véhicule utilitaire complet 1 représenté sur la figure 1 résulte de la fixation de la cellule 2 représentée sur la figure 2 sur le châssis nu 3 représenté sur la figure 6.

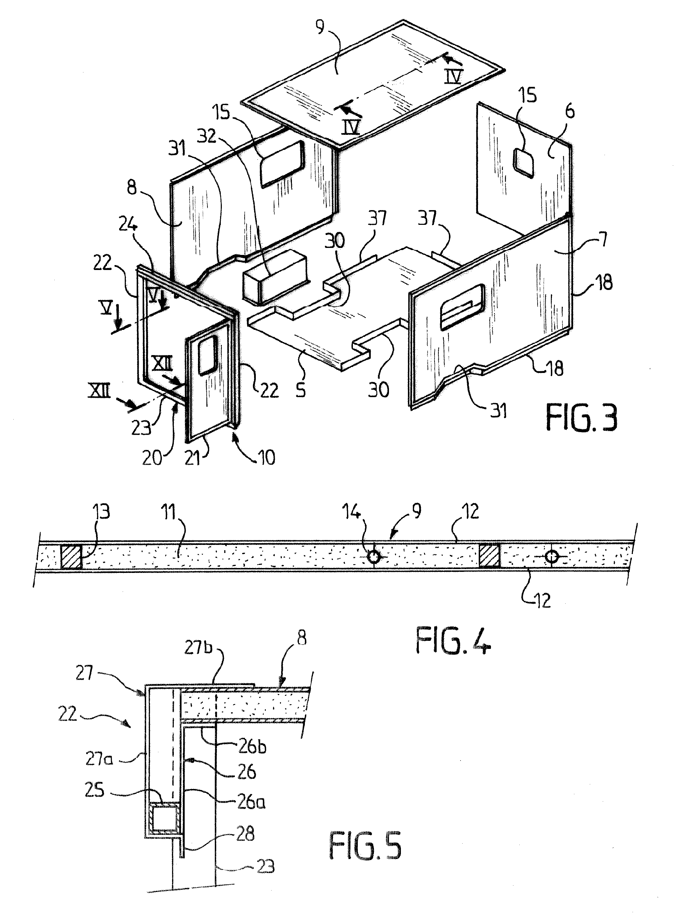

En référence aux figures 1 et 2, la cellule 2 est une structure parallélépipédique autoporteuse et indépendante du châssis, dont les éléments constitutifs essentiels sont visibles sur la figure 3. Elle comporte un panneau de plancher 5, un panneau avant 6, deux panneaux latéraux 7 et 8, un panneau de pavillon 9 et un panneau arrière ouvrant 10, qui sont assemblés en une structure rigide par tout moyen approprié. Les panneaux 5 à 10 peuvent être en tout matériau adapté à un usage en plein air, par exemple en métal, plastique, bois ou composite, avec tout revêtement adapté (peinture, vernis, etc.). Un matériau particulièrement adapté pour les panneaux 5 à 10 est un sandwich consistant en une mousse synthétique prise entre deux plaques de polyester rigide, qui présente une bonne isolation thermique et acoustique malgré une épaisseur modeste, par exemple de 30 mm. Pour le panneau de plancher 5, on peut aussi utiliser une structure synthétique en nid d'abeille entre deux plaques de polyester, par exemple d'environ 10 mm d'épaisseur.

La figure 4 montre une structure possible du panneau de pavillon 9. Une couche de mousse isolante 11 est prise en sandwich entre deux plaques rigides 12 en polyester. Pour la rigidité du panneau, des tasseaux 13 en bois et tôle peuvent être insérés dans la mousse 11. Des tubes métalliques 14 peuvent être également logés dans la mousse 11 et s'étendre sur la largeur du panneau 9 pour faire passer le câblage électrique des plafonniers d'éclairage.

Les panneaux 6 à 9 peuvent être percés d'ouvertures 15 pour assurer l'éclairage et/ou l'aération de la cellule par l'intermédiaire de vitres ouvrantes ou fixes. Des renforts en tôle sont de préférence fixés aux panneaux à proximité de telles ouvertures, comme indiqué au chiffre 95 par exemple.

Dans le mode de réalisation représenté sur la figure 1, une trappe de toit ouvrant 16 est montée sur le panneau de pavillon 9.

Comme visible sur la figure 2, la fixation des panneaux 5 à 10 entre eux est ici assurée au moyen de profilés métalliques 18 qui s'étendent le long de toutes les arêtes de la cellule de manière à relier à chaque fois deux bords de panneaux adjacents. La fixation entre les panneaux et les profilés peut être assurée par tout moyen adapté, tel qu'emboîtement, collage, rivetage ou autre. Les profilés métalliques 18 assurent également l'étanchéité de la cellule, en particulier autour du panneau de pavillon 9.

Dans le mode de réalisation représenté sur les figures 2 et 3, le panneau arrière ouvrant 10 est réalisé sous la forme de deux portes 21 (dont une est omise sur la figure 3) qui sont montées sur des charnières dans un cadre arrière métallique 20. Le cadre arrière 20 est une structure rigide réalisée en tubes métalliques soudés, comprenant deux montants latéraux 22, une traverse supérieure 23 et une traverse inférieure 24.

La figure 5 montre un exemple de réalisation du montant latéral gauche 22, avec un tube à section carrée 25, une tôle intérieure 26 en coin dont une aile 26a s'étend à partir de la face avant du tube 25 latéralement vers l'extérieur du cadre 20 et dont l'autre aile 26b s'étend le long de la face intérieure du panneau 8, une tôle extérieure 27 en coin dont les deux ailes 27a et 27b s'étendent parallèlement aux ailes 26a et 26b sur l'extérieur du cadre 20 de manière à prendre en sandwich une bordure arrière du panneau 8 entre les ailes 27b et 26b, et une cornière intérieure 28 dont une aile fait saillie vers l'intérieur du cadre 20. Ainsi, le cadre arrière 20 est solidaire des profilés métalliques qui assurent son assemblage avec les panneaux 7, 8 et 9.

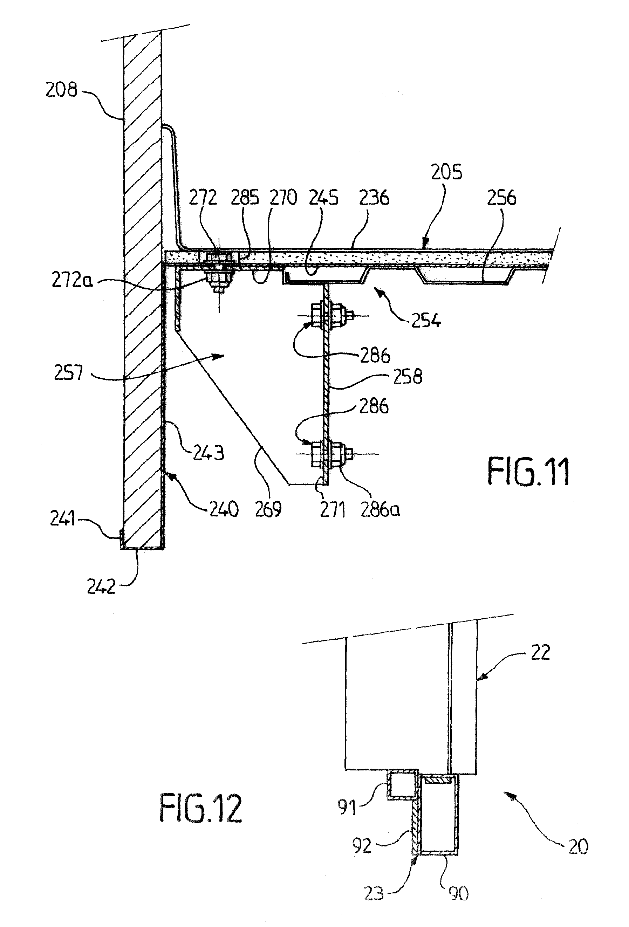

La figure 12 montre une section transversale de la traverse inférieure 23, qui comporte un tube à section carrée 91 et un tube à section rectangulaire 90 soudés l'un à l'autre et soudés, au niveau de leurs deux extrémités, aux montants latéraux 22. Une plaque de renfort 92 est fixée contre la face avant du tube 90 sous le tube 91. Le tube 91 est situé au niveau du panneau de plancher (non représenté) dont le bord arrière vient se poser sur le tube 91.

Bien d'autres structures sont possibles pour le cadre arrière 20, dont la fonction essentielle est de rigidifier la cellule 2 afin qu'elle résiste aux opérations de montage sur le châssis 3 et de dépose.

Aux emplacements destinés à chevaucher les roues arrière du châssis de véhicule, le panneau de plancher 5 présente des découpes 30 et les panneaux latéraux 8 et 7 présentent des découpes 31. Dans la cellule 2, des caissons de passage de roue 32 sont placés au-dessus des découpes 30 de manière à fermer la cellule tout en ménageant un espace pour le passage des roues arrière.

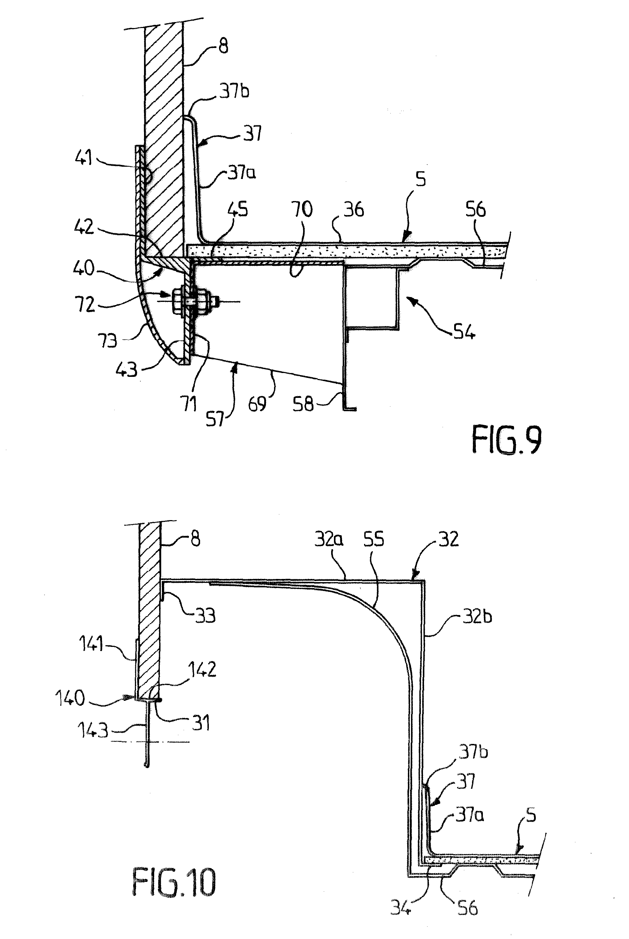

Comme visible sur les figures 3 et 10, dans le mode de réalisation représenté, le caisson de passage de roue 32 est un parallélépipède en tôle ayant deux côtés ouverts, à savoir le côté latéralement extérieur et le côté inférieur. L'aile supérieure 32a du caisson 32 se prolonge d'un rabat 33 riveté et collé contre la face intérieure du panneau latéral 8 et l'aile latérale intérieure 32b du caisson 32 se prolonge d'un rabat 34 sur lequel s'appuie la bordure du panneau de plancher 5. Les figures 3 et 10 montrent aussi la structure sandwich du panneau 5, dont la plaque supérieure 36 se prolonge d'une aile relevée 37 s'étendant le long des bords latéraux et du bord avant du panneau 5 pour éviter les infiltrations de liquide entre le panneau 5 et les panneaux 6 à 8 depuis l'intérieur de la cellule, par exemple lorsque son sol doit être lavé.

L'aile relevée 37 présente de plus une forme courbée qui recouvre les interstices entre les panneaux précités, avec une première partie 37a qui s'élève presque perpendiculairement au panneau de plancher 5, et une deuxième partie 37b qui s'évase vers l'extérieur de la cellule de manière à venir en contact presque perpendiculairement contre la face intérieure des panneaux 6 à 8 et de l'aile 32b au niveau des caissons 32.

On notera que le panneau de plancher 5 n'a pas besoin d'être aussi solidaire que les autres panneaux dans la mesure où, en service, il repose sur le plancher du châssis. Dans le cas où un panneau assez mince est utilisé comme plancher, les équipements et aménagements intérieurs de la cellule sont fixés aux panneaux 6 à 8 pour reprendre leur poids.

La figure 9 montre plus en détail une forme possible des profilés métalliques au niveau des bords inférieurs des panneaux latéraux 7 et 8. Le profilé inférieur 40, dont on voit la section transversale, présente une aile verticale 41 qui est plaquée contre la face extérieure du panneau latéral 8, puis une portion de base 42 qui s'étend horizontalement sous le panneau latéral 8 pour le soutenir, puis une deuxième aile verticale 43 qui s'étend parallèlement à l'aile 41 sous la portion de base 42, les ailes 41 et 43 étant raccordées à deux bords latéralement opposés de la portion de base 42. La portion de base 42 présente une section triangulaire avec une épaisseur croissante vers l'intérieur de la cellule, et donc vers le châssis du véhicule. Enfin, un rebord plan 45 prolonge la portion de base 42 dans la continuité de sa surface supérieure et fait saillie par rapport à l'aile 43 vers le châssis du véhicule. Comme visible sur la figure 10, au niveau des découpes 31, le profilé inférieur 140 est différent, avec des ailes verticales 141 et 143 s'étendant au dessus et au dessous d'une portion de base 142, mais pas de saillie vers l'intérieur du caisson 32.

En référence aux figures 6 et 7, on décrit maintenant le châssis 3 du véhicule de la figure 1, qui comporte un essieu avant 50, un essieu arrière 51, un bloc moteur 52, une cabine de conduite 53 et une plateforme arrière 54 s'étendant derrière la cabine 53. Au niveau des roues arrière, la plateforme 54 présente des bossages de passage de roue 55 en tôle, qui font saillie au dessus du plancher 56 de la plateforme. Un châssis de ce type est disponible dans le commerce auprès de nombreux constructeurs automobiles, avec une longueur comprise entre 4,5 m et 6 m en général, ce qui permet notamment d'embarquer une véritable salle d'opération. La cellule 2 à fixer sur un tel châssis peut présenter typiquement un poids compris entre 500 et 1 000 kg, en fonction de ses dimensions, y compris son aménagement et équipement intérieur. Toutefois, ces valeurs ne sont nullement limitatives.

La plateforme arrière 54 est symétrique par rapport à un axe longitudinal médian A, de sorte qu'on n'en a représenté que la moitié droite sur la figure 7.

Pour adapter le châssis 3 à recevoir la cellule 2, plusieurs éléments peuvent être rapportés sur celui-ci. Dans le mode de réalisation des figures 6 et 7, des goussets latéraux 57 sont fixés le long des côtés verticaux latéraux 58 de la plateforme 54. Ces goussets 57 permettent de créer des points de fixation bien alignés le long d'une ligne longitudinale pour fixer la cellule 2. De plus, une rallonge de châssis 60 est fixée à l'arrière de la plateforme 54 pour adapter la longueur du châssis 3 à la longueur de la cellule 2. La rallonge de châssis 60 comporte deux ailes longitudinales 61 qui s'étendent vers l'arrière du châssis et dont l'extrémité arrière présente, sur le dessus, un grugeage 62 destiné à recevoir la traverse inférieure 23 du cadre arrière 20 de la cellule 2. Une traverse 64 s'étend transversalement entre les deux ailes 61 et un gousset latéral 65 est également fixé à chaque aile 61 en saillie latéralement vers l'extérieur du châssis. La rallonge de châssis 60 est fixée à la face arrière de la plateforme 54 par soudure des extrémités avant des ailes 61, avec soudure de goussets de renfort 63.

Lorsqu'on pose la cellule 2 sur la plateforme 54, le panneau de plancher 5 s'appuie sur le plancher 56 du châssis, les bossages de passage de roue 55 entrent dans les caissons de passage de roue 32, le panneau avant 6 vient le long de la face arrière 66 de la cabine 53 pour être fixé à celle-ci, le cadre arrière 20 s'appuie sur la rallonge de châssis 60 pour être fixé à celle-ci et les profilés inférieurs 40 des panneaux latéraux 7 et 8 s'engagent à l'extérieur des goussets latéraux rapportés 57.

Dans le mode de réalisation représenté sur la figure 10, on voit que l'aile supérieure 32a du caisson de passage de roue 32 repose sur le bossage 55 auquel elle est collée. Si besoin, il est aussi possible de fixer des cales en contreplaqué entre ceux-ci.

Sur les figures 7 et 9, le gousset latéral 57 est réalisé sous la forme d'un élément creux en tôle comprenant deux ailes latérales 69 espacées dans la direction longitudinale du véhicule, une paroi supérieure 70 entre les deux ailes 69 et une paroi d'extrémité 71 fermant le gousset sur son côté latéral extérieur par rapport au châssis 3. Le gousset 57 peut être fixé au châssis par soudure des bords intérieurs des ailes 69 sur le côté 58 de la plateforme 54. Les goussets 65 ont une forme similaire.

Une fois la cellule 2 posée en position, dans le mode de réalisation de la figure 9, l'aile 43 du profilé inférieur 40 vient le long des parois d'extrémité 71 des goussets 57 et 65, de sorte que l'aile 43 peut y être facilement fixée à l'aide de boulons 72 ou par toute autre attache démontable. Une fois les boulons 72 installés, un élément cache rive 73, par exemple sous la forme d'un profilé allongé en plastique, est fixé sur la face extérieure des profilés 40 pour masquer et protéger les boulons 72.

Au niveau du panneau avant 6 de la cellule 2, comme visible sur la figure 8, une fixation est réalisée avec la cabine 53. Pour cela, on prévoit un profilé métallique vertical 74 dans l'épaisseur du panneau avant 6 près de chacun de ses bords latéraux et on réalise un boulonnage avec interposition d'un joint d'étanchéité entre ce profilé 74 et un support de fixation 75, par exemple un cadre prévu de manière standard sur ce type de châssis de véhicule, situé à l'arrière de la cabine 53. La figure 8 laisse aussi apparaître une structure sandwich du panneau 6 et une réalisation possible d'un profilé d'angle 76 entre les panneaux 6 et 8. Le profilé d'angle 76 présente une cornière extérieure 76a et une cornière intérieure 76b présentant chacune deux ailes mutuellement perpendiculaires et un raccord, qui est arrondi pour la cornière 76a et en angle pour la cornière 76b. La bordure du panneau 8 se loge entre deux ailes parallèles des cornières 76a et 76b respectivement, et bute contre un élément de fond 76c qui s'étend perpendiculairement entre ces deux ailes de manière à fixer les cornières 76a et 76b l'une par rapport à l'autre. Il en va de même du panneau 6, dont la bordure bute contre l'élément de fond 76d.

La fixation entre la traverse inférieure 23 du cadre arrière 20 et les ailes longitudinales 61 de la rallonge de châssis 60 est réalisée par boulonnage.

La figure 1 représente le véhicule utilitaire terminé, avec la cellule 2 fixée sur la plateforme arrière 14 et représentée en coupe longitudinale selon la ligne I-I de la figure 2. Dans l'exemple représenté, le véhicule utilitaire est une ambulance ayant des dimensions rentrant dans la classe B de la norme EN1789.

La figure 1 montre la cellule 2 avec certains éléments d'aménagement convenant pour une ambulance. Sur le panneau de pavillon 9 sont fixés deux gyrophares 78 et un ventilateur électrique 79 communiquant avec l'intérieur de la cellule par une ouverture non représentée dans le panneau 9. Pour la circulation des câbles électriques dans la cellule 2, une goulette métallique creuse 80 est fixée en haut du panneau latéral 8, de même qu'un tableau électrique 81. Le circuit électrique intérieur de la cellule est raccordable à une prise d'alimentation prévue sur le châssis 3 de manière standard, au moyen d'un faisceau de câbles non représenté. Un marchepied 82 est fixé sous la rallonge de châssis 60, par exemple soudé.

Bien sûr, le véhicule 1 n'est pas limité à une application d'ambulance. La cellule 2 peut recevoir de nombreux éléments d'ameublement intérieur, qui seront de préférence fixés sur les panneaux 6 à 9, pour être adaptée à diverses applications professionnelles (atelier mobile, véhicule d'intervention d'urgence de type ambulance ou camion de pompier, transport de fonds, pose d'affiches, corbillard, etc.). Par exemple, pour une application d'ambulance, l'ameublement intérieur peut comporter une table porte-brancard, des supports de bouteilles de gaz et un siège pivotant, tous fixés aux panneaux latéraux.

D'autres éléments fonctionnels pouvant être utilisés, selon le métier auquel la cellule est destinée, sont des coffres hauts, un plan de travail avec évier, des meubles latéraux avec étagères et/ou tiroirs et éventuellement des portes, des coffres latéraux ouverts en façade ou formables par rideaux, un ou plusieurs lanterneau(x), un strapontin, un siège pivotant, une table de travail à suspension, un climatiseur, des fixations de bouteilles, et autres. On peut aussi prévoir des coffres intérieurs accessibles depuis l'extérieur de la cellule, au moyen par exemple d'une trappe s'ouvrant à travers un panneau latéral. De tels coffres peuvent servir par exemple à ranger du matériel d'intervention pour les pompiers. Des éléments extérieurs peuvent aussi être prévus pour l'équipement fonctionnel de la cellule ou pour sa décoration ou son marquage, par exemple au nom d'une entreprise.

En référence à la figure 11, on décrit un deuxième mode de réalisation de la cellule 2 et du châssis 3, dans lequel sont modifiés essentiellement les profilés inférieurs assurant la liaison entre les panneaux latéraux et le panneau de plancher et la forme des goussets latéraux. Sur la figure 11, les éléments analogues au premier mode de réalisation (figure 9) portent le même chiffre de référence augmenté de 200.

Le panneau latéral 208 s'étend plus bas que le panneau de plancher 205 de manière à s'engager de chaque côté de la plateforme 254 du châssis lorsque la cellule est mise en position. Le profilé inférieur 240 du panneau latéral 208 présente une section transversale en quatre portions. Une portion 245 s'étend horizontalement entre la face inférieure du panneau de plancher 205 et la face supérieure du plancher 256 du châssis de manière à chevaucher à la fois une zone de bordure latérale du plancher 256 et l'aile supérieure 270 des goussets latéraux 257 jusqu'à la surface intérieure du panneau 208. Une portion 243 est raccordée à angle droit avec la portion 245 et s'étend verticalement le long du panneau 208 jusqu'à son bord inférieur. Une portion de base 242 s'étend sous le panneau latéral 208 pour le soutenir et une portion de retour 241 remonte le long de la surface extérieure du panneau 208 pour assurer son maintien latéralement à la manière d'un crochet. Le profilé inférieur 240 peut être fixé au panneau 208 par tout moyen (colle, rivets).

Les goussets latéraux 257 occupent des positions similaires aux goussets 57 et se distinguent de ceux-ci par le fait qu'ils possèdent une aile 271 fermant le gousset sur son côté latéral intérieur entre les deux ailes latérales 269 et s'appliquant contre la surface latérale 258 de la plateforme 254 pour y être fixée par des boulons 286 dont les écrous 286a se vissent depuis l'intérieur du châssis, qui est accessible par-dessous. La cellule est fixée sur les goussets 257 à l'aide de boulons 272 dont la tige est engagée à chaque fois à travers un perçage de l'aile supérieure 270 et un perçage de la portion 245 du profilé 240. Un lamage 285 est ménagé dans le panneau 205 pour loger la tête du boulon tandis que l'écrou 272a se visse depuis l'intérieur du gousset 257, accessible par-dessous.

Dans les modes de réalisation représentés, la préparation du châssis 3 comprend essentiellement les étapes suivantes à partir d'un châssis standard acheté dans le commerce :
- fixation des goussets latéraux 57 ou 257, par exemple au nombre de six à dix selon la taille de la cellule, après perçage de trous pour les boulons 286 le cas échéant ;
- fixation de la rallonge de châssis 60, qui peut en variante être remplacée par deux goussets arrière similaires aux goussets latéraux et prenant la place des ailes 61.

L'assemblage de la cellule peut être avantageusement réalisé dans l'ordre suivant :
- préparation du panneau avant 6 avec fixation à celui-ci d'un profilé inférieur (cornière),
- préparation du panneau latéral droit 7 puis gauche 8/208, avec fixation des profilés inférieurs 40/140/240, montage des caissons de passage de roue 32 et fixation des profilés avant 76,
- assemblage de la cellule sur un gabarit de montage, avec montage du panneau droit 7 au panneau avant 6, montage du cadre arrière 20 au panneau 7, montage du panneau gauche 8/208 au panneau 6 et au cadre arrière 20, montage du plancher 5/205, mise sous pression du plancher et montage du panneau de pavillon 9 sur l'ensemble. Ces différents montages impliquent à chaque fois un collage et la mise en place de rivets.

Une fois assemblée, la cellule 2 est posée sur la plateforme arrière 54/254 du châssis 3, par exemple à l'aide d'un chariot élévateur qui saisit la cellule depuis l'arrière en engageant les branches d'élévateur à travers le cadre arrière (portes ouvertes ou démontées) sous le panneau de pavillon 9. En variante, des points d'attache peuvent être rapportés sur le dessus du panneau de pavillon 9 ou sur l'extérieur des profilés inférieurs 40/240 pour permettre un levage de la cellule par une grue à la manière d'un conteneur de marchandises. La fixation de la cellule sur le châssis est avantageusement effectuée dans l'ordre suivant :
- montage des boulons 87 entre le panneau avant 6 et le support 75, par exemple cinq boulons 87,
- contre-perçage des goussets latéraux 57/257 et, le cas échéant, du panneau de plancher 205,
- montage des boulons 72/272, par exemple un par gousset latéral,
- contre-perçage de la rallonge de châssis ou des goussets arrière et boulonnage du cadre arrière 20 de la cellule à ceux-ci,
- branchement électrique,
- montage des caches-rives 73, le cas échéant.

Dans les modes de réalisation ci-dessus, on a décrit des structures de cellule qui sont autoporteuses et rigides et qui se fixent facilement sur un châssis de véhicule. On a aussi décrit des châssis de véhicule spécifiquement aménagés pour recevoir et fixer ces cellules. On appréciera que ces cellules peuvent être aménagées avec divers éléments fonctionnels pour différentes applications professionnelles et différents métiers, notamment avec des éléments de mobilier et d'aménagement spécifiques à un métier présentant un coût élevé par rapport au coût du châssis nu, par exemple l'équipement spécialisé d'une ambulance. Quel que soit son aménagement, la cellule aménagée est un produit fini prêt à l'emploi qui peut être déplacé d'un seul tenant pour la pose sur un châssis de véhicule et la dépose.

Lorsque le châssis ou le moteur est usé, il est très facile de déposer la cellule du châssis usagé, de préparer un nouveau châssis acheté dans le commerce et de remonter la cellule sur le nouveau châssis. Dans les modes de réalisation représentés, ces opérations ne demandent pas plus de 24 heures, grâce à la simplicité et à l'accessibilité des moyens d'attache entre la cellule et le châssis et grâce à la simplicité des opérations de préparation du châssis, à savoir essentiellement la mise en place de goussets latéraux et d'une rallonge de châssis à l'arrière. Un châssis ainsi préparé peut aussi être facilement remis dans son état d'origine si besoin. Grâce à la rigidité de la cellule, celle-ci supporte les opérations de levage depuis un châssis usagé, de transport, et de pose sur un nouveau châssis sans se détériorer, sans se déformer de manière irréversible et sans détériorer l'ameublement intérieur fixé aux panneaux de la cellule.

En particulier, le cadre arrière rigide ne subit aucune déformation qui pourrait nuire au bon fonctionnement des portes arrière de la cellule.

Bien que l'on ait représenté des boulons comme moyens d'attache entre la cellule et le châssis, toute autre attache facilement démontable peut être employée de manière équivalente.

Pour déposer la cellule 2 du châssis 3, on peut procéder dans l'ordre suivant :
- démontage des caches-rives 73, le cas échéant,
- démontage des boulons 72/272,
- démontage des boulons 87,
- démontage des boulons entre le cadre arrière 20 et la rallonge de châssis 60,
- débranchement du faisceau de câbles entre cellule et châssis.

Le remontage est similaire au premier montage décrit précédemment.

Les exemples décrits ci-dessus se rapportent à des cellules dont les dimensions correspondent, dans le cas d'une cellule d'ambulance, à la classe B de la norme EN1789. Des dimensions différentes sont réalisables, notamment en conformité avec la classe C ou la classe A de cette norme.

Parmi les applications de ces cellules, certaines peuvent requérir davantage d'ouvertures telles que portes et/ou fenêtres que dans les exemples représentés et certaines peuvent requérir moins d'ouvertures. Par exemple, il peut être utile de supprimer des ouvertures pour accroître la surface intérieure de la cellule susceptible de recevoir des éléments d'aménagement fonctionnel, notamment dans le cas d'une cellule-atelier.

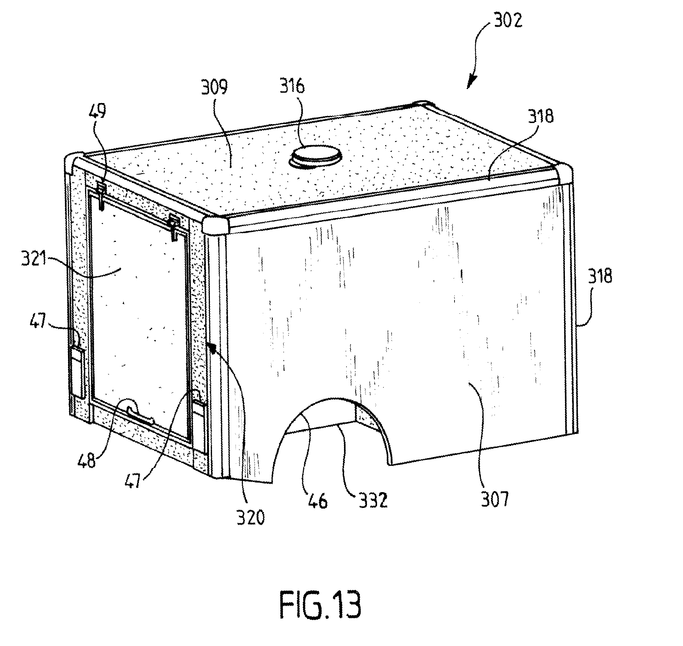

A titre illustratif, la figure 13 montre une cellule 302 aménageable comme cellule-atelier. Les éléments identiques ou similaires à ceux du premier mode de réalisation sont désignés par le même chiffre de référence augmenté de 300. Ici, les panneaux latéraux et le panneau avant sont dépourvus de fenêtres, comme visible sur le panneau latéral 307. Le cadre arrière 320 encadre une unique porte 321 qui est montée basculante autour de son bord horizontal supérieur au moyen de deux charnières 49 dont la partie côté cellule est à chaque fois apte à coulisser le long d'un rail (non représenté) fixé au panneau de toit 309 de manière que la porte 321 rentre dans la cellule lors de son mouvement d'ouverture, à la manière d'une porte de garage. La porte 321 est munie d'une poignée 48 permettant de manoeuvrer une serrure coopérant avec une gâche située au niveau du plancher de la cellule. Des feux arrière de véhicule 47 équipent les montants latéraux du cadre arrière 320.

La figure 13 montre aussi l'intérieur d'un caisson de passage de roue 332 au droit duquel le panneau latéral 307 présente une découpe en arc de cercle 46 destinée à accueillir une roue. Grâce à l'absence de fenêtre, toute la surface intérieure des panneaux latéraux et avant est disponible pour recevoir des éléments d'aménagement de cellule-atelier.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Cellule destinée à un aménagement intérieur fonctionnel et apte à être fixée sur un châssis de véhicule automobile (3), ladite cellule (2) comportant une paroi de plancher (5), deux parois latérales (7, 8), une paroi avant (6), une paroi de toit (9) et une paroi arrière (10) munie d'au moins une porte (21), lesdites parois étant assemblées de manière à former une structure autoporteuse rigide apte à être soulevée d'un seul tenant, ladite paroi de plancher et lesdites parois latérales incluant un panneau de plancher (5, 205) et deux panneaux latéraux (8, 208) respectivement, qui sont assemblés par des éléments profilés (40, 240) s'étendant le long de deux bords latéraux opposés dudit panneau de plancher, **caractérisée par le fait que** lesdits éléments profilés (40, 240) présentent des zones de fixation aptes à coopérer avec des attaches amovibles (72, 272) pour fixer ladite cellule sur un châssis de véhicule.

2. Cellule selon la revendication 1, **caractérisée par le fait que** ladite paroi arrière comporte un cadre rigide (20) lié à une portion arrière desdites paroi de plancher (5), parois latérales (7, 8) et paroi de toit (9), ladite porte étant montée dans ledit cadre.

3. Cellule selon la revendication 2, **caractérisée par le fait que** ledit cadre rigide (20) est réalisé en éléments métalliques (25, 90, 91) soudés.

4. Cellule selon l'une des revendications 1 à 3, **caractérisée par le fait que** chacun desdits éléments profilés (40, 240) inclut une portion de base (42, 242) disposée sous un panneau latéral (8, 208) pour soutenir ledit panneau latéral, une portion de retenue (41, 241) faisant saillie au dessus de ladite portion de base pour retenir ledit panneau latéral dans une direction latérale de ladite cellule et une portion d'appui (45, 245) faisant saillie latéralement vers l'intérieur de ladite cellule par rapport à ladite portion de base et apte à s'appuyer sur un plancher (56, 256) du châssis de véhicule.

5. Cellule selon la revendication 4, **caractérisée par le fait que** chacun desdits éléments profilés (40) inclut une portion de fixation (43) s'étendant perpendiculairement sous ladite portion de base (42) et apte à être fixée latéralement contre ledit châssis de véhicule.

6. Cellule selon l'une des revendications 1 à 5, **caractérisée par le fait que** lesdites parois latérales, paroi avant et paroi de pavillon comprennent respectivement un panneau stratifié (6-9) incluant une couche de matière alvéolaire synthétique (11).

7. Cellule selon l'une des revendications 1 à 6, **caractérisée par le fait qu'**elle comporte des éléments intérieurs d'aménagement fonctionnel solidaires desdites parois (5-10).

8. Cellule selon la revendication 7, **caractérisée par le fait qu'**elle comporte un aménagement intérieur d'atelier mobile adapté à une application professionnelle spécifique.

9. Cellule selon la revendication 7, **caractérisée par le fait qu'**elle comporte un aménagement intérieur d'ambulance pour le transport de personnes malades ou blessés.

10. Cellule selon l'une des revendications 1 à 9, **caractérisée par le fait que** ladite paroi de plancher (5) comporte des découpes (30) sur les bords latéraux pour laisser dépasser des roues arrières de véhicule (51) en saillie au-dessus de ladite paroi de plancher, lesdites découpes étant masquées par des coffrages (32) reliant ladite paroi de plancher auxdites parois latérales (7, 8).

11. Véhicule automobile comportant un châssis (3) muni d'une plateforme arrière (54, 254) et une cellule selon l'une des revendications 1 à 10 fixée sur ladite plateforme, des supports de fixation (57, 257) étant rapportés sur les côtés latéraux (58, 258) de ladite plateforme pour soutenir les zones latérales de ladite cellule et étant liés à ladite cellule par lesdites attaches amovibles (72, 272).

12. Véhicule automobile selon la revendication 11, **caractérisé par le fait que** lesdits supports de fixation (57, 257) sont réalisés en tôle métallique et présentent respectivement deux ailes latérales (69, 269) faisant saillie vers l'extérieur dans la direction latérale dudit châssis et espacées l'une de l'autre dans la direction longitudinale dudit châssis, ainsi qu'au moins une paroi longitudinale (71, 270) percée pour recevoir au moins une desdites attaches (72, 272) et s'étendant entre lesdites ailes latérales, l'espace situé entre lesdites ailes latérales étant accessible depuis un côté inférieur desdites ailes latérales.

13. Véhicule automobile selon la revendication 12, **caractérisé par le fait que** ladite au moins une paroi longitudinale inclut une paroi supérieure (270), chacun desdits éléments profilés (240) incluant une portion de base (242) disposée sous un panneau latéral (208) pour soutenir ledit panneau latéral, une portion de retenue (241) faisant saillie au dessus de ladite portion de base pour retenir ledit panneau latéral dans une direction latérale de ladite cellule et une portion d'appui (245) faisant saillie latéralement vers l'intérieur de ladite cellule par rapport à ladite portion de base et fixée sur ladite paroi supérieure du support de fixation (257).

14. Véhicule automobile selon la revendication 12, **caractérisé par le fait que** ladite au moins une paroi longitudinale inclut une paroi d'extrémité latérale (71), chacun desdits éléments profilés (40) incluant une portion de base (42) disposée sous un panneau latéral (8) pour soutenir ledit panneau latéral, une portion de retenue (41) faisant saillie au dessus de ladite portion de base pour retenir ledit panneau latéral dans une direction latérale de ladite cellule, une portion d'appui (45) faisant saillie latéralement vers l'intérieur de ladite cellule par rapport à ladite portion de base et une portion de fixation (43) s'étendant perpendiculairement sous ladite portion de base (42) et fixée contre ladite paroi d'extrémité latérale du support de fixation (57).

15. Véhicule automobile selon l'une des revendications 11 à 14, **caractérisée par le fait qu'**il comporte un support arrière (60) rapporté sur le côté arrière de ladite plateforme pour soutenir une zone arrière de ladite cellule et lié à ladite cellule par des attaches amovibles.

16. Véhicule automobile selon la revendication 15, **caractérisé par le fait que** ladite paroi arrière de la cellule comporte un cadre rigide (20) lié à une portion arrière desdites paroi de plancher (5), parois latérales (7, 8) et paroi de toit (9), ladite porte étant montée dans ledit cadre, ledit cadre rigide étant lié audit support arrière (60).

17. Véhicule automobile selon l'une des revendications 11 à 16, **caractérisé par le fait que** lesdites attaches amovibles comportent des boulons (72, 272).

18. Procédé d'exploitation d'une cellule selon l'une des revendications 1 à 10 comportant les étapes consistant à
déposer ladite cellule (2) d'un châssis de véhicule automobile (3) sur lequel ladite cellule avait été préalablement fixée, lorsque ledit châssis de véhicule automobile ou le moteur dudit châssis de véhicule automobile est usé,
remonter ladite cellule (2) sur un nouveau châssis de véhicule automobile aménagé pour recevoir et fixer ladite cellule.

19. Procédé selon la revendication 18, dans lequel le véhicule automobile (1) formé dudit châssis de véhicule automobile (3) et de ladite cellule (2) qui avait été préalablement fixée dessus est selon l'une des revendications 11 à 17.

20. Procédé selon la revendication 18 ou 19, dans lequel le véhicule automobile formé dudit nouveau châssis de véhicule automobile et de ladite cellule remontée sur ledit nouveau châssis de véhicule automobile est selon l'une des revendications 11 à 17.
